# EUROPÄISCHE PATENTANMELDUNG

(11) **EP 1 103 874 A2**
(43) Veröffentlichungstag der Anmeldung: **30.05.2001**
(21) Anmeldenummer: 00125767.4
(22) Anmeldetag: 24.11.2000
(51) Int. Cl.: G05B 13/02, B21B 37/00, B21B 41/12

(54) **Verfahren zur Optimierung der Geschwindigkeiten einer Verbundanlage**

(30) Priorität: 25.11.1999 AT 200199
(71) Anmelder: VOEST-ALPINE INDUSTRIEANLAGENBAU GESELLSCHAFT m.b.H., A-4031 Linz (AT)
(72) Erfinder: Pichler, Rudolf, Dipl.-Ing., 4112 Rottenegg (AT); Tichy, Sonja, Dipl.-Ing., 4040 Linz (AT)
(74) Vertreter: VA TECH Patente GmbH

(57) **Zusammenfassung**

Die Erfindung betrifft ein Verfahren zur Optimierung der Geschwindigkeiten einer Verbundanlage von Bandanlagen, wie z.B. einer verbundenen Beize-Tandemkaltwalzanlage und ist dadurch gekennzeichnet, dass ein mathematisches Optimierungsproblem für die gesamte betrachtete Verbundanlage aufgestellt wird, mit den Bandgeschwindigkeiten in mindestens einem Anlagenteil als Variablen, den technologischen Grenzen und den Anlagengrenzen für jeden Anlagenteil und insbesondere den Grenzen der Bandspeicher als Restriktionen und zumindest dem Durchsatz als Zielfunktion, dass das Optimierungsproblem durch ein Verfahren aus der endlichdimensionalen mathematischen Optimierungstheorie gelöst wird und dass die Ergebnisse der Optimierung für die Steuerung der Verbundanlage oder im Rahmen der Produktionsplanung verwendet werden. Alternativ kann ein mathematisches Optimierungsproblem für die gesamte betrachtete Verbundanlage aufgestellt werden mit der Anlagengeschwindigkeit in mindestens einem Anlagenteil als Kontrollvariable, wobei hierbei das Optimierungsproblem durch ein Verfahren aus der Kontrolltheorie gelöst wird.

## Beschreibung

Die Erfindung betrifft ein Verfahren zur Optimierung der Geschwindigkeiten einer Verbundanlage von Bandanlagen, wie z.B. einer verbundenen Beize-Tandemkaltwalzanlage.

Bei Verbundanlagen von Bandanlagen, wie z.B. einer verbundenen Beize-Tandemkaltwalzanlage, ist es erforderlich, die Geschwindigkeiten der einzelnen Anlagenteile aufeinander abgestimmt, im Rahmen der Anlagengrenzen und technologischen Grenzen, so zu betreiben, dass
- die Bandspeicher nicht vollständig entleert bzw. gefüllt werden, was zum ungeplanten Anhalten eines Anlagenteiles führen kann,
- der maximal mögliche Durchsatz der Gesamtanlage erreicht wird und
- gewisse oder alle Anlagenteile jeweils mit möglichst kontinuierlicher Geschwindigkeit innerhalb eines Bandes betrieben werden.

Unter einer Verbundanlage von Bandanlagen ist prinzipiell eine kontinuierliche Anlage zu verstehen, die sich aus mehreren Anlagenteilen zusammensetzt, wobei die Anlagenteile über Bandspeicher miteinander verbunden sind, um unterschiedliche Geschwindigkeiten in den verschiedenen Anlagenteilen auszugleichen, insbesonders kurze, technologisch erforderliche Stillstände in einem Anlagenteil oder mehreren Anlagenteilen (z.B. Stillstand zum Schweißen zweier Bänder bzw. zum Schneiden eines Bandes).

So ist auch eine kontinuierliche Beizanlage mit einem Einlaufbereich (Abhaspel und Schweißmaschine), Bandspeichern vor und nach den eigentlichen Beiztanks und einem Auslaufbereich (Schere, Aufhaspel) als Verbundanlage von Bandanlagen zu betrachten.

Die Standardlösung, welche in den meisten Anlagen diesen Typs angewendet wird, ist die Übertragung der Koordination der Anlagenteile an das Bedienpersonal, welches natürlich teilweise überfordert ist, da die komplexen Zusammenhänge und Auswirkungen von Geschwindigkeitsvorgaben vom Menschen nicht zu überblicken sind.

Weiters sind Lösungen bekannt, bei denen ein Rechnersystem verwendet wird, um diese Koordination für das gerade aktuelle Band bzw. die jeweils aktuellen Bänder in den einzelnen Anlagenteilen durchzuführen. Auch diese Lösung greift zu kurz, da es nicht Ziel ist, die Anlage für jene Bänder zu optimieren, die sich gerade in den verschiedenen Anlagenteilen befinden, sondern diese über einen längeren Zeitraum für mehrere Bänder optimal zu fahren und insbesondere die Betrachtung nur eines Bandes pro Anlagenteil keine brauchbare Fahrweise liefert.

Der Artikel "Optimisation of the Process Speed for Pickle Lines and Coupled-Pickle-Line-Cold-Mills", D.N. Nguyen, W.Y.D. Yuen, Port Kembla Laboratories, BHP Research, BHP Steel (bzw. der Artikel "Speed Optimisation of a Coupled Process", W.Y.D. Yuen, D.N. Nguyen, Proc. 1^{st} Biennial Engineering Mathematics Conference, Melbourne, July 11-13, 1994) beschreibt ein Verfahren zur Bestimmung optimaler Geschwindigkeiten für Einlauf, Beize und Tandemeinlauf einer verbundenen Beize-Tandemkaltwalzanlage, wobei hierbei nur jene Bänder betrachtet werden, die sich gerade in der Anlage befinden, sowie zusätzlich das gerade in die Anlage einlaufende Band. Hierbei wird die Anlage in zwei Teilsysteme mit nichtleerem Durchschnitt unterteilt, wobei diese Teilsysteme zunächst entkoppelt betrachtet werden und erst anschließend aus den Ergebnissen der Teilsysteme die Ergebnisse für die Gesamtanlage erstellt werden.

Es werden für das in Einlauf, Beize und Tandemeinlauf jeweils aktuelle Band optimale Geschwindigkeiten für den jeweiligen Anlagenteil ermittelt mit dem Ziel der Durchsatzmaximierung und der Vermeidung des Erreichens von Speichergrenzen, wobei eine Konstanz der Beizgeschwindigkeit über die gesamte Bandlänge nicht garantiert ist. In jedem Anlagenteil wird immer nur das gerade aktuelle Band betrachtet, nachfolgende Bänder gehen nicht in die Berechnung ein.

Auf Seite 4 der genannten Veröffentlichung wird darauf hingewiesen, dass, basierend auf der Fahrweise der einzelnen Anlagenteile (wobei ein Anhalten bei der Besäumschere hierbei ausgeschlossen wird), die Berechnung optimaler Geschwindigkeiten für ebendiese unter Berücksichtigung mehrerer nachfolgender Bunde zwar theoretisch möglich, aber extrem kompliziert ist, weshalb es auch keine Veröffentlichungen über diese systematische Geschwindigkeitsoptimierung in der Literatur gäbe.

Somit erwähnt der Artikel zwar die Berücksichtigung zusätzlicher Bänder (nicht nur jener, die sich gerade in den einzelnen Anlagenteilen befinden), zeigt aber keinen Weg zur Lösung des Problems auf.

Eine Aufgabe der vorliegenden Erfindung besteht nun darin, ein Verfahren zu entwickeln, das die genannten Nachteile überwindet. Insbesondere soll ein Verfahren geschaffen werden, bei dem über mehrere aufeinanderfolgende Bänder unter Einhaltung der Anlagengrenzen und technologischen Grenzen die eingangs genannten Ziele erreicht werden.

Die Erfindung ist dadurch gekennzeichnet, dass ein mathematisches Optimierungsproblem für die gesamte betrachtete Verbundanlage aufgestellt wird, mit den Bandgeschwindigkeiten in mindestens einem Anlagenteil als Variablen, den technologischen Grenzen und den Anlagengrenzen für jeden Anlagenteil und insbesondere den Grenzen der Bandspeicher als Restriktionen und zumindest dem Durchsatz als Zielfunktion, dass das Optimierungsproblem durch ein Verfahren aus der endlichdimensionalen mathematischen Optimierungstheorie gelöst wird und dass die Ergebnisse der Optimierung für die Steuerung der Verbundanlage oder im Rahmen der Produktionsplanung verwendet werden.

Die Lösung des Optimierungsproblems erfolgt in diesem Fall entweder mit einem iterativen Verfahren aus der nichtlinearen, restringierten Optimierungstheorie, z.B. einem SQP-Verfahren, oder mit einem Verfahren aus der linearen, restringierten Optimierungstheorie, z.B. einem Simplexverfahren.

Eine alternative Lösung der gestellten Aufgabe besteht darin, dass ein mathematisches Optimierungsproblem für die gesamte betrachtete Verbundanlage aufgestellt wird, mit der Anlagengeschwindigkeit in mindestens einem Anlagenteil als Kontrollvariable, den technologischen Grenzen und den Anlagengrenzen für jeden Anlagenteil und insbesondere den Grenzen der Bandspeicher als Restriktionen und zumindest dem Durchsatz als Zielfunktion, dass das Optimierungsproblem durch ein Verfahren aus der Kontrolltheorie gelöst wird und dass die Ergebnisse der Optimierung für die Steuerung der Verbundanlage oder im Rahmen der Produktionsplanung verwendet werden.

Unter dem Begriff mathematisches Optimierungsproblem wird hier sowohl ein endlichdimensionales mathematisches Optimierungsproblem als auch ein Problem aus der Kontrolltheorie verstanden. Die erfindungsgemäßen Lösungen gewährleisten, dass die Bandspeicher vorgegebene Grenzen für die Füllgrade nicht über- bzw. unterschreiten, dass ein möglichst hoher Durchsatz der Gesamtanlage erreicht wird und dass gewisse oder alle Anlagenteile jeweils mit möglichst kontinuierlicher Geschwindigkeit innerhalb eines Bandes betrieben werden.

Im Mittelpunkt der Lösung steht die konsequente Anwendung der mathematischen Optimierungstheorie, wie nachstehend beschrieben wird. Die Zielfunktion, also jene Funktion, die unter Berücksichtigung der Restriktionen on-line oder off-line maximiert bzw. minimiert wird, beschreibt den Durchsatz in der Gesamtanlage oder in einem für die Gesamtanlage repräsentativen Anlagenteil im Beobachtungszeitraum.

Hierbei wird vorteilhafterweise die Fahrweise der einzelnen Anlagenteile nicht nur für den gerade aktuellen Anlagenzustand, d.h. für jene Bänder, die sich gerade in den einzelnen Anlagenteilen befinden bzw. deren Geschwindigkeiten vorgeben, optimiert, sondern es werden in mindestens einem Anlagenteil mehrere aufeinanderfolgende Bänder, insbesondere auch noch nicht in der Verbundanlage befindliche Bänder, in die Optimierung einbezogen, was eine bessere Ausnützung der Speicherkapazitäten sowie eine erhöhte Kontinuität der Geschwindigkeiten in den einzelnen Anlagenteilen über die Bandlänge ermöglicht.

Wie erwähnt sieht die erste Lösung vor, dass die Geschwindigkeiten der betrachteten Bänder in mindestens einem Anlagenteil die Variablen des Optimierungsproblems darstellen. Hierbei kann ein betrachtetes Band eine oder mehrere Geschwindigkeitsvariablen für das Optimierungsproblem liefern.

Die zweite Lösung sieht vor, in mindestens einem Anlagenteil die Anlagengeschwindigkeit im Beobachtungszeitraum als Funktion der Zeit aufzufassen, wobei jede dieser Funktionen eine Kontrollvariable in einem Problem aus der Kontrolltheorie darstellt.

Die Anlagengeschwindigkeit der Beize beschreibt beispielsweise die Bandeintrittsgeschwindigkeit in den ersten Beiztank als Funktion der Zeit, welche sich über mehrere Bänder erstrecken kann.

Folgendes gilt für beide Lösungen:

Die Geschwindigkeiten können in allen Anlagenteilen durch Optimierung bestimmt werden, es besteht aber auch die Möglichkeit, für gewisse Anlagenteile konventionelle Geschwindigkeitssteuerungen oder fix vorgegebene Geschwindigkeiten für die einzelnen Bänder zu verwenden.

Weiters besteht die Möglichkeit, nur gewisse Geschwindigkeiten in einem Anlagenteil als variabel zu betrachten. So kann z.B. im Tandemeinlauf einer verbundenen Beize-Tandemkaltwalzanlage die reduzierte Geschwindigkeit zum Überwalzen der Schweißnaht bzw. zum Schneiden der Bänder nach der Tandemstraße für jedes betrachtete Band als vorgegeben angesehen werden und nur die Geschwindigkeit über die restliche Bandlänge durch Optimierung bestimmt werden. Weiters können auch die Geschwindigkeiten für gewisse einzelne Bänder fix vorgegeben sein.

Technologisch erforderliche Stillstände in einem Anlagenteil, wie beispielsweise die Zeit für das Zusammenschweißen der Bänder im Einlaufteil der Verbundanlage, werden gemäß ihrer geplanten Dauer in der Optimierung berücksichtigt, wobei diese Dauer aus Tabellen bzw. mithilfe von Berechnungsvorschriften ermittelt wird.

Ebenso können vorhersehbare Stillstände von beschränkter, abschätzbarer Dauer in einzelnen Anlagenteilen der Verbundanlage in der Optimierung berücksichtigt werden, beispielsweise zum Auswechseln von Verschleißteilen (z.B. Arbeitswalzenwechsel in der Tandemstraße) oder Stillstände für kurze Wartungsarbeiten.

Die Optimierung basiert auf einer gewissen Anzahl von Bändern, die einen vorgegebenen Anlagenteil bzw. die Gesamtanlage durchlaufen müssen. Den Beobachtungszeitraum für die Optimierung stellt dann jener geschwindigkeitsabhängige Zeitraum dar, der für die Verarbeitung (bzw. das Durchlaufen) dieser vorgegebenen Anzahl von Bändern in dem entsprechenden Anlagenteil bzw. in der Gesamtanlage benötigt wird (wobei die Geschwindigkeitsvariablen nicht auf diesen Anlagenteil beschränkt sind; die vorgegebene Anzahl definiert lediglich den Zeitraum, betrachtet wird aber weiterhin die gesamte Anlage).

So kann z.B. die Optimierung der Geschwindigkeiten für Beize, Besäumschere und Tandemeinlauf in einer verbundenen Beize-Tandemkaltwalzanlage für jenen Zeitraum erfolgen, der durch die Verarbeitung von einer gewissen Anzahl von nachfolgenden Bunden in der Tandemstraße definiert wird.

Die Zielfunktion lässt sich vorteilhafterweise durch einen der folgenden Terme oder durch eine gewichtete, vorzeichenbehaftete Kombination von mindestens zwei der folgenden Terme beschreiben:
- Länge des Beobachtungszeitraums, d.h. jene Gesamtzeit, die die vorgegebene Anzahl von Bunden benötigt, um den betrachteten Anlagenteil bzw. die Verbundanlage zu durchlaufen.
- Verarbeitete bzw. durchlaufende Materiallänge im Beobachtungszeitraum in einem Anlagenteil oder mehreren Anlagenteilen, welche nicht den Beobachtungszeitraum festlegen.
- Gewichtete Summe aller bzw. einzelner Bandgeschwindigkeiten in einem Anlagenteil oder in mehreren Anlagenteilen (für den Fall, dass die Bandgeschwindigkeiten über gewisse Bandlängen konstant gehalten werden) bzw. die mittlere Anlagengeschwindigkeit in einem Anlagenteil oder in mehreren Anlagenteilen.

Eine andere Ausführung der Erfindung besteht darin, dass ein fixer Beobachtungszeitraum unabhängig von der Anzahl der in den einzelnen Anlagenteilen betrachteten Bänder vorgegeben wird. So kann z.B. die Fahrweise der Verbundanlage für die folgenden 20 Minuten optimiert werden.

Die Zielfunktion lässt sich dabei vorteilhafterweise durch einen der folgenden Terme oder durch eine gewichtete, vorzeichenbehaftete Kombination von mindestens zwei der folgenden Terme beschreiben:
- Materiallänge, welche in dem vorgegebenen Zeitintervall in einem Anlagenteil oder in mehreren Anlagenteilen verarbeitet wird bzw. einen Anlagenteil oder mehrere Anlagenteile durchläuft.
- Gewichtete Summe aller bzw. einzelner Bandgeschwindigkeiten in einem Anlagenteil oder mehreren Anlagenteilen (für den Fall, dass die Bandgeschwindigkeiten über gewisse Bandlängen konstant gehalten werden)

Der Durchsatz in einer verbundenen Beize-Tandemkaltwalzanlage kann beispielsweise durch die im betrachteten Zeitintervall gewalzte Materiallänge beschrieben werden.

Allgemein gilt weiters Folgendes: Wird in der Zielfunktion die verarbeitete Materiallänge in einem Anlagenteil berücksichtigt, in dem eine Längung des Materials stattfindet, so kann sowohl die einlaufende, ursprüngliche Länge als auch die auslaufende Länge in die Zielfunktion eingehen.

Unter dem Durchlaufen eines Anlagenteiles kann der Eintritt des Materials in den Anlagenteil, der Austritt aus dem Anlagenteil oder das eigentliche Durchlaufen des Anlagenteils gemeint sein.

Es kann erfindungsgemäß vorgesehen werden, dass die Zielfunktion für mindestens einen Anlagenteil zusätzliche, für die Bandqualität relevante Terme, insbesondere versehen mit einem Gewichtungsfaktor, enthält.

Derartige gewichtete geschwindigkeitsabhängige Terme, welche die Bandqualität beschreiben, können alle in dem jeweiligen Anlagenteil betrachteten Bänder umfassen oder eine Teilmenge davon. Beispiele für derartige Terme sind
- die Summe der vorzugsweise gewichteten quadratischen Abweichungen der Bandgeschwindigkeiten von einer für jedes Band vorgegebenen Zielgeschwindigkeit bzw. die gewichtete Summe der Integrale der quadratischen Abweichungen der Anlagengeschwindigkeit von einer für jedes Band vorgegebenen Zielgeschwindigkeit.
- die Summe der vorzugsweise gewichteten quadratischen Abstände der Geschwindigkeiten zweier aufeinanderfolgender Bänder (falls die Bandgeschwindigkeiten als Variablen aufgefasst werden).
- die gewichtete Summe der Integrale über die Quadrate der Beschleunigungen innerhalb gewisser oder aller Bänder (hierdurch werden Geschwindigkeitsschwankungen innerhalb eines Bandes in einem Anlagenteil minimiert)
- das Integral über die gewichteten Quadrate der Beschleunigungen im Beobachtungszeitraum bzw. über mehrere Bänder (hierdurch soll eine möglichst konstante Geschwindigkeit in einem Anlagenteil erreicht werden), wobei Geschwindigkeitsschwankungen innerhalb eines Bandes stärker gewichtet werden können wie Geschwindigkeitsschwankungen beim Übergang zwischen zwei Bändern.

Grundsätzlich kann jede gewichtete Kombination der verschiedenen Beispiele als Beitrag zur Zielfunktion verwendet werden.

Ein Merkmal der Erfindung besteht darin, die Geschwindigkeiten in mindestens einem Anlagenteil für alle betrachteten Bänder über die jeweilige Bandlänge konstant zu halten. Ausgenommen von dieser Konstanz sind lediglich technologisch erforderliche Geschwindigkeitsreduktionen bzw. Stillstände, die fix vorgegeben sind. Stellen die Bandgeschwindigkeiten die Variablen dar, so liefert in diesem Fall jedes in dem jeweiligen Anlagenteil betrachtete Band genau eine Variable für das Optimierungsproblem.

Ein anderes Merkmal der Erfindung besteht darin, die maximale Anzahl von Geschwindigkeitsänderungen innerhalb eines Bandes vorzugeben.

Die Bandgeschwindigkeiten unterliegen in jedem Anlagenteil gewissen Restriktionen. Diese ergeben sich aus den Eigenschaften des jeweiligen Anlagenteils und technologisch aus der Forderung nach gewissen Bandeigenschaften bzw. der Bandqualität. Dadurch ergeben sich für jedes betrachtete Band in jedem Anlagenteil Ober- und Untergrenzen für die Bandgeschwindigkeit.

Diese zulässigen Geschwindigkeitsbereiche dienen als Eingangsgrößen für die Optimierung und können z.B. mithilfe mathematischer Modelle (die Obergrenze für die Tandemauslaufgeschwindigkeit kann beispielsweise im Hinblick auf die Motorauslastung und unter Berücksichtigung einer maximal möglichen Tandemauslaufgeschwindigkeit berechnet werden), durch Anwendung von Methoden aus der künstlichen Intelligenz oder aus Tabellen ermittelt werden, oder sie sind einfach durch eine maximale und minimale Geschwindigkeit des betreffenden Anlagenteils vorgegeben.

Für die Bestimmung der Obergrenze für die Tandemauslaufgeschwindigkeit siehe beispielsweise Roberts, W.L.: "Cold Rolling of Steel", Manufacturing Engineering and Materials Processing / 2, Marcel Dekker, Inc., New York and Basel, 1978 in Kombination mit Fischer, R.: "Elektrische Motoren", Hanser Wiss., München 1996.

Grundsätzlich können, wenn vorhanden, die Prozessmodelle der jeweiligen Anlagenteile, gegebenenfalls mit einer geringfügigen Modifikation, zur Bestimmung der zulässigen Geschwindigkeitsintervalle herangezogen werden.

Diese Gruppe von Restriktionen (beschrieben durch zulässige Geschwindigkeitsintervalle für die variablen Geschwindigkeiten) wird im Folgenden als Geschwindigkeitsrestriktionen bezeichnet.

Neben den Ober- und Untergrenzen für die einzelnen Geschwindigkeiten ergibt sich eine zweite Gruppe von Restriktionen aus der Forderung, dass die Inhalte sämtlicher Bandspeicher der Anlage zu jedem Zeitpunkt des für die Optimierung betrachteten Zeitintervalls innerhalb gewisser Grenzen liegen müssen. Diese Restriktionen werden im Folgenden als Bandspeicherrestriktionen bezeichnet.

Zusätzlich zu den Geschwindigkeits- und Bandspeicherrestriktionen kann eine dritte Gruppe von Restriktionen berücksichtigt werden, welche gewährleistet, dass die absolute Geschwindigkeitsdifferenz zwischen zwei Anlagenteilen, welche durch einen Bandspeicher miteinander verbunden sind, zu keinem Zeitpunkt des Beobachtungszeitraums einen maximalen Wert übersteigt. Dieser maximale Wert ergibt sich aus der Anzahl der Speicherwägen des Bandspeichers und deren maximaler Geschwindigkeit und beschreibt somit die maximale Geschwindigkeit, mit der der Inhalt eines Bandspeichers zu- bzw. abnehmen kann. Die maximale absolute Differenz zwischen einlaufender und auslaufender Geschwindigkeit eines Bandspeichers kann in der Optimierung für einen oder mehrere Bandspeicher berücksichtigt werden und kann für verschiedene Speicher unterschiedliche Werte annehmen.

Stellen die Bandgeschwindigkeiten die Variablen des Optimierungsproblems dar, so besteht die Möglichkeit, in gewissen Anlagenteilen die Beschleunigungen durch Geschwindigkeitssprünge in der Mitte des Beschleunigungsintervalls zu ersetzen. Dann kann für jeden Bandspeicher das betrachtete Zeitintervall in Teilintervalle mit konstanter Eingangs- und konstanter Ausgangsgeschwindigkeit partitioniert werden. In diesem Fall ist es im Wesentlichen ausreichend, die Bandspeicherlängen sowie ggf. die maximale Geschwindigkeitsdifferenz zwischen den Sektionen zu jenen Zeitpunkten zu prüfen, die die Intervallgrenzen dieser Partitionierung darstellen.

Stellen die Bandgeschwindigkeiten die Variablen des Optimierungsproblems dar, so erfolgt die Lösung des beschriebenen Optimierungsproblems vorzugsweise mithilfe eines Verfahrens aus der nichtlinearen, restringierten Optimierung, wie zum Beispiel einem SQP-Verfahren, siehe beispielsweise Schittkowski, K.: "On the Convergence of a Sequential Quadratic Programming Method with an Augmented Lagrangian Line Search Function", Math. Operationsforsch. u. Statist., Ser. Optimization, Vol. 14 (1983), No.2, 197 - 216.

Eine alternative Lösung des vereinfachten Optimierungsproblems erfolgt mithilfe eines Verfahrens aus der linearen Optimierung, beispielsweise eines Simplexverfahrens, siehe Luenberger, D. G.,"lntroduction to Linear and Nonlinear Programming", Addison-Wesley Publishing Company, Inc., Reading, Massachusetts, 1973.

Werden die Anlagengeschwindigkeiten als Kontrollvariablen aufgefasst (jeder als variabel betrachtete Anlagenteil liefert eine Kontrollvariable), so erfolgt die Lösung des hierdurch beschriebenen Problems mit einem Verfahren aus der Kontrolltheorie. Entsprechende Verfahren sind in Bryson, A. E., Ho, Yu-Chi: "Applied Optimal Control", Revised Printing, Hemisphere Publishing Cooperation, Washington, New York, London, 1975, gezeigt.

Es besteht im Rahmen der Erfindung die Möglichkeit, für gewisse Anlagenteile konventionelle Geschwindigkeitssteuerungen zu verwenden. Die Geschwindigkeit in diesen Anlagenteilen wird dann z.B. in Abhängigkeit der Speicherfüllgrade der angrenzenden Bandspeicher bzw. des angrenzenden Bandspeichers und der Geschwindigkeiten in den benachbarten Anlagenteilen bestimmt. So wird im Einlaufteil einer verbundenen Beize-Tandemkaltwalzanlage typischerweise nach einer reduzierten Geschwindigkeit bzw. dem Anhalten bei der Schere und der Schweißmaschine auf die maximal mögliche Geschwindigkeit beschleunigt, um den nachfolgenden Bandspeicher wieder aufzufüllen (Aufholphase). Wird der Speicher hierdurch gefüllt, bevor ein Anhalten bzw. eine Geschwindigkeitsreduktion für das nachfolgende Band erforderlich ist, so wird die Geschwindigkeit im Einlaufbereich an die Beizgeschwindigkeit angepasst.

Werden für gewisse Anlagenteile vorgegebene Steuerungsalgorithmen verwendet, so sind die Geschwindigkeiten in diesen Anlagenteilen keine Variablen im engeren Sinn, die Steuerung des Anlagenteils geht aber sehr wohl in das Optimierungsproblem ein und kann bei der Bestimmung der optimierten Geschwindigkeiten eine wichtige Rolle spielen.

Wird z.B. für den Einlaufbereich einer verbundenen Beize-Tandemkaltwalzanlage die oben angeführte Geschwindigkeitssteuerung verwendet, so hat diese Steuerung über den Einlaufspeicher, der ja einen gewissen Füllgrad nicht über- oder unterschreiten darf, Einfluss auf die Beizgeschwindigkeiten, welche z.B. Variable im Optimierungsproblem darstellen.

Das erfindungsgemäße Verfahren wird auf einem Rechner, der mit der Anlage verbunden ist, verwirklicht. Hierbei wird die Optimierung zyklisch oder ereignisbezogen ausgeführt, ausgehend von dem aktuellen Anlagenzustand bestehend aus den Füllgraden der Bandspeicher, den Geschwindigkeiten der einzelnen Anlagenteile und der Belegung der Speicher und Anlagenteile mit Bändern.

Bänder, die im Optimierungsprozess berücksichtigt werden sollen, die sich aber noch nicht in der Anlage befinden, gehen gemäß ihrer geplanten Produktionsreihenfolge ein.

Wurden gewisse Bänder in dem entsprechenden Anlagenteil bereits in einem früheren Optimierungsprozess berücksichtigt, so können die Ergebnisse dieser Optimierung als Startwerte für den neuen Optimierungsprozess herangezogen werden.

Ereignisse, die den Optimierungsprozess auslösen, können z.B. der Eintritt eines neuen Bandes in einen gewissen Anlagenteil sein, aber auch ungeplante Ereignisse, wie z.B. eine wesentliche Überschreitung von geplanten Stillstandszeiten oder wesentliche Abweichungen von den berechneten Geschwindigkeiten, z.B. aufgrund händischer Eingriffe.

Die Erfindung kann dazu verwendet werden, die Vorausberechnung der Bandgeschwindigkeiten mittels mathematischer Optimierung mit konventionellen Geschwindigkeitssteuerungen zu kombinieren. In diesem Fall werden jene Ober- und Untergrenzen für die Inhalte der Bandspeicher in der Optimierung berücksichtigt, bei deren Über- bzw. Unterschreitung die konventionelle, kurzfristige Steuerung mit einer Anpassung/Reduktion der in den Speicher einlaufenden bzw. auslaufenden Bandgeschwindigkeit reagiert bzw. eine Reduktion auf Schleichgeschwindigkeit oder ein Anhalten in einer Sektion bewirkt.

Weiters kann vorgesehen werden, dass die Geschwindigkeitsoptimierung im Rahmen der Produktionsplanung erfolgt, indem der Optimierung ein Suchverfahren zur Ermittlung einer optimalen Bandreihenfolge im Sinne der Durchsatzoptimierung überlagert wird. Hierbei kann die Geschwindigkeitsoptimierung z.B. im Rahmen eines Suchverfahrens zur Ermittlung einer optimalen Bandreihenfolge hinsichtlich Durchsatz und Bandqualität eingesetzt werden.

Vorteilhaft ist zusätzlich, wenn die Optimierung zur Simulation von geplanten Stillständen in einer Verbundanlage verwendet wird, um den optimalen Zeitpunkt für einen solchen Stillstand zu ermitteln.

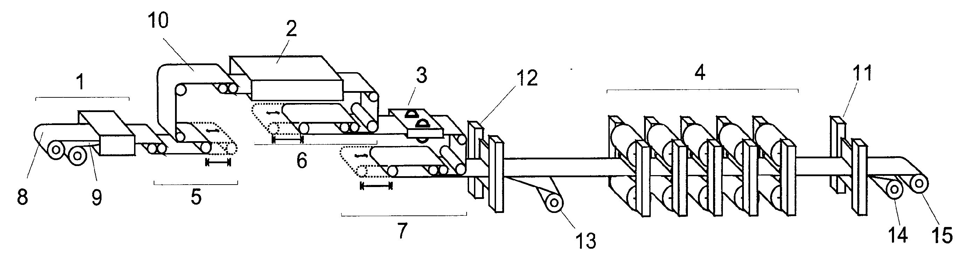

Die Erfindung wird im Folgenden anhand einer verbundenen Beize-Tandemkaltwalzanlage, welche in der Figur schematisch dargestellt ist, beispielhaft beschrieben.

Die Figur zeigt die Komponenten einer verbundenen Beize-Tandemkaltwalzanlage, bestehend aus vier Anlagenteilen, nämlich dem Einlaufteil (Einlaufsektion) 1, der Beize (Beizesektion) 2, der Stanze (nicht dargestellt) / Besäumschere 3 und der Tandemstraße 4. Die vier Anlagenteile sind durch drei Bandspeicher, nämlich durch den Einlaufspeicher 5, den Zwischenspeicher 6 und den Auslaufspeicher 7 miteinander zu einer kontinuierlichen Anlage verbunden. Um die Füllgrade der Speicher und somit die gespeicherte Bandlänge zu variieren, sind die einzelnen Speicher 5, 6 und 7 mit verschiebbaren Speicherwägen ausgestattet, was in der Figur jeweils durch Pfeile dargestellt ist.

Alternativ zum Walzen der Bänder in der Tandemstraße 4 kann eine Fahrweise gewählt werden, bei der die Bänder bereits nach dem Auslaufspeicher 7 mittels einer hierfür vorgesehenen Schere 12 geschnitten und anschließend aufgehaspelt werden (Aufhaspel 13), ohne die Tandemstraße zu durchlaufen. Auf diese alternative Fahrweise wird im Folgenden nicht näher eingegangen.

In der Einlaufsektion 1 erfolgt das Abschneiden von Bandkopf und Bandende, wofür eine fixe reduzierte Bandgeschwindigkeit bzw. ein Anhalten erforderlich ist, sowie das Zusammenschweißen von aufeinanderfolgenden Bändern 8, 9 zu einem kontinuierlichen Band 10 für die kontinuierliche Fahrweise, was wiederum eine Manipulationszeit (Stillstandszeit) in der Einlaufsektion verursacht. Für die Einlaufsektion wird die oben bereits beschriebene konventionelle Geschwindigkeitssteuerung verwendet:

Nach der Manipulationszeit zum Zusammenschweißen der Bänder wird auf die maximal mögliche Geschwindigkeit der Einlaufsektion 1 beschleunigt und diese wird - unter Berücksichtigung der maximal möglichen Geschwindigkeitsdifferenz zwischen Einlauf - und Beizesektion beibehalten, bis entweder das Bandende erreicht ist und die Geschwindigkeit zum Abschneiden des Bandendes reduziert werden muss oder bis der maximal mögliche Speicherinhalt erreicht wird. Wird der maximale Speicherinhalt erreicht, bevor das Bandende erreicht ist, so wird die Einlaufgeschwindigkeit der Beizgeschwindigkeit angeglichen. In der Beizesektion 2 wird aus Gründen der Bandqualität eine konstante Geschwindigkeit pro Band gefordert, wobei für jedes Band von dem für die Beize verwendeten Prozessmodell ein zulässiger Geschwindigkeitsbereich vorgegeben wird. Die Schweißnaht zwischen zwei Bändern durchläuft die Beiztanks beispielsweise mit einer vorgegebenen reduzierten Geschwindigkeit für jedes Band oder mit dem Minimum der Beizgeschwindigkeiten der beiden betroffenen Bänder. Jedes Band, welches im Beobachtungszeitraum gebeizt wird, liefert somit eine Geschwindigkeitsvariable für das Optimierungsproblem.

Bei der Besäumschere 3 wird ebenfalls die Konstanz der Geschwindigkeit pro Band gefordert, wobei zusätzlich jede Breitenumstellung der Schere eine Manipulationszeit, d.h. eine Stillstandszeit bei Stanze / Besäumschere erfordert. Im Falle einer Breitenumstellung durchläuft die Schweißnaht den Abstand zwischen der Stanze (in der Figur nicht eingezeichnet) und der Besäumschere mit einer vorgegebenen Geschwindigkeit. Als Obergrenze für die Geschwindigkeit in der Besäumsektion wird für jedes Band die von der Sektion vorgegebene maximale Besäumgeschwindigkeit gewählt. Jedes Band, welches im Beobachtungszeitraum die Besäumsektion durchläuft, liefert eine Geschwindigkeitsvariable für das Optimierungsproblem.

In der Tandemstraße 4 wird mit Ausnahme der Geschwindigkeitsreduktion zum Überwalzen der Schweißnaht bzw. zum Schneiden der Bänder mittels der Schere 11, welches mit einer fixen, reduzierten Tandemauslaufgeschwindigkeit erfolgt, ebenfalls eine konstante Tandemeinlaufgeschwindigkeit pro Band gefordert, wobei die Geschwindigkeitsgrenzen für jedes Band durch das für die Stichplanrechnung zuständige Prozessmodell ermittelt werden. Jedes im Beobachtungszeitraum gewalzte Band liefert dadurch eine Geschwindigkeitsvariable für das Optimierungsproblem.

Die beiden Aufhaspeln 14, 15 dienen alternierend dem Aufwickeln der gewalzten Bänder nach der Tandemstraße.

Die Optimierung erfolgt, ausgehend vom aktuellen Anlagenzustand, für ein fixes Zeitintervall. Hierfür müssen vor dem Start der Optimierung bereits die zulässigen Geschwindigkeitsintervalle für Beize 2, Besäumschere 3 und Tandemeinlauf 4 für jedes Band , welches im Beobachtungszeitraum eine der Sektionen 2, 3, 4 durchlaufen kann, vorhanden sein. Es muss somit die Möglichkeit bestehen, die entsprechenden Prozessmodelle für Beize 2 und Tandemstraße 4 im Voraus auszuführen.

Die Bandspeicherrestriktionen ergeben sich aus der Forderung, daß sich die Inhalte von Einlauf-, Zwischen- und Auslaufspeicher zu jedem Zeitpunkt des Beobachtungszeitraumes in einem für jeden der Speicher 5, 6, 7 vorgegebenen Intervall befinden müssen.

Weiters darf die absolute Geschwindigkeitsdifferenz zwischen jeweils zwei benachbarten Sektionen zu keinem Zeitpunkt des Beobachtungsintervalls die für den entsprechenden Speicher vorgegebene maximale Geschwindigkeitsdifferenz überschreiten.

Als Zielfunktion dient der Durchsatz in der Tandemstraße, beschrieben durch die im Beobachtungszeitraum aus der Tandemstraße auslaufende Materiallänge. Die Zielfunktion wird dann unter Berücksichtigung sämtlicher Restriktionen maximiert.

Für die Dauer der Manipulationszeiten in der Einlaufsektion 1 (Abschneiden von Bandende, Schweißen) und bei der Stanze / Besäumschere 3 (Breitenumstellung) werden hierbei Schätzwerte verwendet, die entweder nach bestimmten Berechnungsvorschriften ermittelt werden oder aber vorab durch statistische Auswertungen einer umfangreichen Datenbasis gewonnen werden.

Die Ergebnisse der Optimierung, nämlich die Bandgeschwindigkeiten für Beize 2, Besäumsektion 3 und Tandemeinlauf 4, werden dann an das ausführende System der Verbundanlage weitergegeben und umgesetzt. Da die Optimierung zyklisch erfolgt und die weiter in der Zukunft liegenden Bandgeschwindigkeiten im nächsten Optimierungszyklus wieder verändert werden können, ist es sinnvoll, immer nur die Geschwindigkeiten für das jeweils folgende Band und gegebenenfalls das aktuelle Band in den einzelnen Sektionen an das ausführende System weiterzuleiten.

## Patentansprüche

1. Verfahren zur Optimierung der Geschwindigkeiten einer Verbundanlage von Bandanlagen, wie z.B. einer verbundenen Beize-Tandemkaltwalzanlage, **dadurch gekennzeichnet, dass** ein mathematisches Optimierungsproblem für die gesamte betrachtete Verbundanlage aufgestellt wird, mit den Bandgeschwindigkeiten in mindestens einem Anlagenteil als Variablen, den technologischen Grenzen und den Anlagengrenzen für jeden Anlagenteil und insbesondere den Grenzen der Bandspeicher als Restriktionen und zumindest dem Durchsatz als Zielfunktion, dass das Optimierungsproblem durch ein Verfahren aus der endlichdimensionalen mathematischen Optimierungstheorie gelöst wird und dass die Ergebnisse der Optimierung für die Steuerung der Verbundanlage oder im Rahmen der Produktionsplanung verwendet werden.

2. Verfahren nach Anspruch 1, **dadurch gekennzeichnet, dass** das Optimierungsproblem mit einem iterativen Verfahren aus der nichtlinearen, restringierten Optimierungstheorie, z.B. einem SQP-Verfahren gelöst wird.

3. Verfahren nach Anspruch 1, **dadurch gekennzeichnet, dass** das Optimierungsproblem mit einem Verfahren aus der linearen, restringierten Optimierungstheorie, z.B. einem Simplexverfahren gelöst wird.

4. Verfahren zur Optimierung der Geschwindigkeiten einer Verbundanlage von Bandanlagen, wie z.B. einer verbundenen Beize-Tandemkaltwalzanlage, **dadurch gekennzeichnet, dass** ein mathematisches Optimierungsproblem für die gesamte betrachtete Verbundanlage aufgestellt wird, mit der Anlagengeschwindigkeit in mindestens einem Anlagenteil als Kontrollvariable, den technologischen Grenzen und den Anlagengrenzen für jeden Anlagenteil und insbesondere den Grenzen der Bandspeicher als Restriktionen und zumindest dem Durchsatz als Zielfunktion, dass das Optimierungsproblem durch ein Verfahren aus der Kontrolltheorie gelöst wird und dass die Ergebnisse der Optimierung für die Steuerung der Verbundanlage oder im Rahmen der Produktionsplanung verwendet werden.

5. Verfahren nach einem der Ansprüche 1 bis 4, **dadurch gekennzeichnet, dass** in dem Optimierungsproblem mehrere, insbesondere noch nicht in der Verbundanlage befindliche Bänder berücksichtigt werden.

6. Verfahren nach einem der Ansprüche 1 bis 5, **dadurch gekennzeichnet, dass** die Zielfunktion für mindestens einen Anlagenteil zusätzliche, für die Bandqualität relevante Terme, insbesondere versehen mit einem Gewichtungsfaktor, enthält.

7. Verfahren nach einem der Ansprüche 1 bis 6, **dadurch gekennzeichnet, dass** abgesehen von technologisch erforderlichen und somit vorgegebenen Geschwindigkeitsänderungen für mindestens ein betrachtetes Band in mindestens einem Anlagenteil die Bandgeschwindigkeit über die jeweilige Bandlänge konstant gehalten wird.

8. Verfahren nach einem der Ansprüche 1 bis 7, **dadurch gekennzeichnet, dass** die Grenzen der Geschwindigkeiten für jedes betrachtete Band in den verschiedenen Anlagenteilen mithilfe von Modellen, z.B. einem Stichplanmodell für eine Tandemstraße, Verfahren aus der künstlichen Intelligenz oder Tabellen, ermittelt werden und/oder dass für die Geschwindigkeiten für den jeweiligen Anlagenteil anlagenspezifische Grenzen vorgegeben sind.

9. Verfahren nach einem der Ansprüche 1 bis 8, **dadurch gekennzeichnet, dass** die für einzelne Anlagenteile verwendeten vorgegebenen Steuerungsalgorithmen zur Geschwindigkeitssteuerung in der Optimierung berücksichtigt werden.

10. Verfahren nach einem der Ansprüche 1 bis 9, **dadurch gekennzeichnet, dass** bei der Lösung des Optimierungsproblems der aktuelle Anlagenzustand, bestehend aus den Füllgraden der Bandspeicher, den Geschwindigkeiten der Anlageteile und der Belegung der Anlagenteile mit Bändern herangezogen wird.
